# EUROPÄISCHE PATENTSCHRIFT

(11) **EP 2 800 880 B1**
(45) Veröffentlichungstag und Bekanntmachung des Hinweises auf die Patenterteilung: **29.04.2020**
(21) Anmeldenummer: 12801479.2
(22) Anmeldetag: 22.11.2012
(51) Int. Cl.: F01D 17/06, F02C 6/12, G01P 3/488, G01P 3/49

(54) **SENSORVORRICHTUNG ZUR BERÜHRUNGSLOSEN ERFASSUNG EINER ROTATIONSEIGENSCHAFT EINES DREHBAREN GEGENSTANDES**
SENSOR DEVICE FOR THE CONTACTLESS DETECTION OF A ROTATION PROPERTY OF A ROTATABLE OBJECT
DISPOSITIF DE DÉTECTION SANS CONTACT D'UNE PROPRIÉTÉ DE ROTATION D'UN OBJET TOURNANT

(30) Priorität: 04.01.2012 DE 102012200092
(43) Veröffentlichungstag der Anmeldung: 12.11.2014
(73) Patentinhaber: Robert Bosch GmbH, 70442 Stuttgart (DE)
(72) Erfinder: LERNER, Martin, 70376 Stuttgart (DE); LERCHENMUELLER, Klaus, 87549 Rettenberg (DE)
(86) Internationale Anmeldenummer: PCT/EP2012/073308
(87) Internationale Veröffentlichungsnummer: WO 2013/102510

(56) Entgegenhaltungen:
- DE-A1- 19 623 236
- DE-A1-102006 021 430
- DE-A1-102009 027 853
- US-A1- 2005 017 709
- US-A1- 2005 280 412
- US-A1- 2007 139 044

## Beschreibung

### Stand der Technik

Aus dem Stand der Technik sind zahlreiche Sensoren bekannt, welche mindestens eine Rotationseigenschaft drehbarer, insbesondere rotierender, Gegenstände erfassen. Unter Rotationseigenschaften sind dabei allgemein Eigenschaften zu verstehen, welche die Rotation des drehbaren Gegenstandes zumindest teilweise beschreiben. Hierbei kann es sich beispielsweise um Winkelgeschwindigkeiten, Drehzahlen, Winkelbeschleunigungen, Drehwinkel, Winkelstellungen oder andere Eigenschaften handeln, welche eine kontinuierliche oder diskontinuierliche, gleichförmige oder ungleichförmige Rotation oder Drehung des drehbaren Gegenstands charakterisieren können.

Beispiele derartiger Sensoren sind aus Konrad Reif (Hrsg.): Sensoren im Kraftfahrzeug, 1. Auflage 2010, Seiten 63-73 bekannt. Ein besonderer Schwerpunkt der vorliegenden Erfindung, auf welche die Erfindung jedoch grundsätzlich nicht beschränkt ist, liegt in einer Drehzahlerfassung, insbesondere der Drehzahlerfassung von Aufladeeinrichtungen, insbesondere in Abgasturboladern. Diese Drehzahlerfassung kann insbesondere eingerichtet sein, um eine Drehzahl eines Laufrads des Abgasturboladers zu erfassen. Dieses Laufrad ist in der Regel mit einer Mehrzahl von Verdichterschaufeln ausgestattet und kann daher auch als Verdichterrad bezeichnet werden.

Aus der DE 10 2007 005 769 A1 ist eine Drehzahlerfassungseinrichtung für eine Aufladeeinrichtung, insbesondere für ein Laufrad eines Abgasturboladers, bekannt. Dabei werden separat Permanentmagnete und eine Sensorschaltung verwendet, welche räumlich voneinander getrennt angeordnet werden. Es wird ein Gehäuse, das das Laufrad umfasst, aus einem Kunststoffmaterial verwendet, in welches die Permanentmagnete als Einlegeteil eingebettet sind. Die Sensorschaltung wird an einer Außenseite der Wand des Gehäuses in einer Ausnehmung aufgenommen.

Bei anderen aus dem Stand der Technik bekannten Vorrichtungen wird typischerweise ein zylindrischer Sensor verwendet, welcher einen möglichst geringen Durchmesser aufweist und von außen in eine Bohrung des Gehäuses eingebracht wird. Da die hohen Temperaturen in der Nähe des Verdichterrads in der Regel die Anwendung herkömmlicher Halbleiterbauelemente ausschließen, wäre eine thermische Entkoppelung des Sensorgehäuses von dem Gehäuse des Verdichterrads wünschenswert. Weitere Drehzahlsensoren werden in den folgenden Dokumenten beschrieben: DE 10 2009 027 853 A1, US 2007/0139044 A1, DE 196 23 236 A1, US 2005/0017709 A1 und DE 10 2006 021 430 A1.

Trotz der zahlreichen Vorteile der aus dem Stand der Technik bekannten Drehzahlerfassungseinrichtungen beinhalten diese daher noch Verbesserungspotenzial.

### Offenbarung der Erfindung

Es wird dementsprechend eine Kombination aus einer Sensorvorrichtung zur berührungslosen Erfassung einer Rotationseigenschaft eines drehbaren Gegenstandes und einer den drehbaren Gegenstand umfassenden Vorrichtung gemäss Anspruch 1 vorgeschlagen, welche die Nachteile bekannter Verfahren und Strategien zumindest weitgehend vermeiden kann und bei der eine thermische Entkoppelung zwischen dem Sensorgehäuse und einem Verdichtergehäuse vorgesehen wird.

Die Sensorvorrichtung zur berührungslosen Erfassung einer Rotationseigenschaft eines drehbaren Gegenstands, insbesondere zur Erfassung einer Drehzahl eines Verdichterrads eines Turboladers, umfasst ein Sensorgehäuse. Die Sensorvorrichtung umfasst weiterhin mindestens einen Magnetfelderzeuger zur Erzeugung eines magnetischen Felds am Ort des drehbaren Gegenstands und mindestens einen Magnetfeldsensor zur Erfassung eines durch Wirbelströme des drehbaren Gegenstands erzeugten Magnetfelds. Die Sensorvorrichtung weist weiterhin mindestens ein Verbindungselement auf, wobei das Verbindungselement eingerichtet ist, um die Sensorvorrichtung derart mit einer den drehbaren Gegenstand umfassenden Vorrichtung, insbesondere einem Turbolader, zu verbinden, dass der Magnetfelderzeuger und der Magnetfeldsensor zumindest teilweise gemeinsam in einem Sensorabschnitt des Sensorgehäuses angeordnet sind und das Sensorgehäuse zumindest abschnittsweise von der den drehbaren Gegenstand umfassenden Vorrichtung beabstandet ist.

Der Magnetfelderzeuger kann entlang einer Achse ausgerichtet sein und eine Längsachse des Sensorabschnitts kann sich im Wesentlichen parallel zu der Achse des Magnetfelderzeugers erstrecken, wobei der Sensorabschnitt so ausgebildet ist, dass sich in einem an der den drehbaren Gegenstand umfassenden Vorrichtung angebrachten Zustand des Sensorgehäuses zwischen dem Sensorabschnitt und dem drehbaren Gegenstand in einer Richtung im Wesentlichen parallel zu der Längsachse des Sensorabschnitts ein Teil der Vorrichtung befindet. Die Abmessung des Teils der Vorrichtung kann in der Richtung der Längsachse von 0,1 mm bis 2 mm, bevorzugt von 0,2 mm bis 1,8 mm und noch bevorzugter von 0,5 mm bis 1 mm, sein. Der Sensorabschnitt kann in eine Aufnahme in einer Wand der Vorrichtung einbringbar sein und im eingebrachten Zustand kann sich in der Richtung der Längsachse des Sensorabschnitts zwischen dem Sensorabschnitt und dem Teil der Vorrichtung ein Spalt befinden. Der Sensorabschnitt ist in eine Aufnahme in einer Wand der Vorrichtung einbringbar und im eingebrachten Zustand befindet sich zumindest abschnittsweise ein koaxialer Spalt zwischen der Wand der Vorrichtung und dem Sensorabschnitt.

Das Sensorgehäuse kann Abstandshalter aufweisen, die in einem an der den drehbaren Gegenstand umfassenden Vorrichtung angebrachten Zustand des Sensorgehäuses die Vorrichtung berühren. Das Sensorgehäuse kann Stege und/oder kreisförmige Vorsprünge aufweisen, die in einem an der den drehbaren Gegenstand umfassenden Vorrichtung angebrachten Zustand des Sensorgehäuses die Vorrichtung berühren. Der Gegenstand kann um eine Drehachse drehbar sein, wobei die Längsachse des Sensorabschnitts in einem an der Vorrichtung angebrachten Zustand des Sensorgehäuses in einem Winkel von 25 ° bis 65 ° und besonders bevorzugt von 30 ° bis 60 ° und noch bevorzugter von 45 ° zu der Drehsachse angeordnet ist. Der Magnetfeldsensor kann ein induktiver Magnetfeldsensor sein und die Sensorvorrichtung kann zum Erfassen einer Drehzahl des drehbaren Gegenstands eingerichtet sein. Der Sensorabschnitt kann als nicht magnetische Hülse ausgebildet sein, wobei die Hülse bevorzugt zumindest teilweise aus Edelstahl hergestellt ist. Das Sensorgehäuse kann aus Kunststoff ausgebildet sein. Die Sensorvorrichtung kann ein Drehzahlsensor sein und der drehbare Gegenstand kann ein Verdichterrad eines Laders, insbesondere eines Abgasturboladers, sein. Die Sensorvorrichtung kann einen Verstärker aufweisen, der eingerichtet ist, ein von dem Magnetfeldsensor geliefertes Signal zu verstärken.

Der Magnetfeldsensor kann insbesondere mindestens eine Spule umfassen. Dies bietet den Vorteil, dass mittels Spulen große Sensorflächen realisierbar sind. Gleichzeitig lassen sich durch die Verwendung von Spulen Temperaturempfindlichkeiten, welche beispielsweise bei Halbleiter-Magnetfeldsensoren oder magnetresistiven Sensoren auftreten, vermeiden. Die Spule kann beispielsweise eine Flachspule sein und kann vorzugsweise einen Spulenquerschnitt mit einer Wicklungsfläche aufweisen, welche eben oder auch gekrümmt sein kann, welche eine Spulenhöhe der Spule, beispielsweise entlang einer Achse der Spule, überschreiten kann.

Der Magnetfelderzeuger kann insbesondere einen, beispielsweise genau einen, zwei, drei oder mehr Permanentmagneten umfassen. Der Magnetfelderzeuger kann insbesondere zumindest teilweise von dem Magnetfeldsensor umschlossen sein. Dies kann beispielsweise dadurch erfolgen, dass die Spule den Permanentmagneten vollständig oder teilweise umschließt. Auch der Permanentmagnet kann beispielsweise eine Rechteckform und/oder eine ovale Form aufweisen, mit einer längeren Seite oder längeren Halbachse in einer Ebene, welche die Achse des drehbaren Gegenstands einschließt.

Im Rahmen der vorliegenden Erfindung sind unter Rotationseigenschaften allgemein Eigenschaften zu verstehen, welche die Rotation des drehbaren Gegenstandes zumindest teilweise beschreiben. Hierbei kann es sich beispielsweise um Winkelgeschwindigkeiten, Drehzahlen, Winkelbeschleunigungen, Drehwinkel; Winkelstellungen oder andere Eigenschaften handeln, welche eine kontinuierliche oder diskontinuierliche, gleichförmige oder ungleichförmige Rotation oder Drehung des drehbaren Gegenstands charakterisieren können.

Im Rahmen der vorliegenden Erfindung ist unter dem Ausdruck "im Wesentlichen parallel" unter Bezugnahme auf eine Richtung eine Abweichung von vorzugsweise maximal 15 °, insbesondere maximal 10 °, insbesondere maximal 5 ° und besonders bevorzugt 0 ° von der Richtung, auf die Bezug genommen wird, zu verstehen.

Bei der Angabe von Winkeln zwischen zwei Richtungen oder Achsen ist im Rahmen der vorliegenden Erfindung ein Winkel zwischen den Richtungen oder Achsen zu verstehen, wobei sich die Achsen gedanklich schneiden, so dass sie mit Ausnahme einer rechtwinkligen Anordnung zueinander zwischen sich zwei Winkelpaare unterschiedlicher Größe aufspannen, wobei im Rahmen der vorliegenden Erfindung stets ein Winkel des kleineren Winkelpaars gemeint ist.

Unter einem Gehäuseinnenraum ist im Rahmen der vorliegenden Erfindung insbesondere derjenige Raum in einem Gehäuse einer Sensorvorrichtung zur berührungslosen Erfassung einer Rotationseigenschaft eines drehbaren Gegenstands zu verstehen, in dem sich die Elektronik, wie beispielsweise die Auswerteschaltung und deren elektrische Anschlüsse, befindet, so dass dieser auch als Elektronikraum bezeichnet werden kann.

Die Sensorvorrichtung kann beispielsweise ein Drehzahlsensor sein. Der Drehzahlsensor besteht beispielsweise aus einem passiven Sensorkopf oder Sensorabschnitt, einem aktiven Signalverstärker/Impulsformer, einem Gehäuse mit Befestigungsbuchse und einem Steckanschluss. Der Sensorkopf kann beispielsweise einen Magnetkreis mit Induktivität, wie beispielsweise eine Dünndrahtwicklung, auf einem Spulenkörper umfassen. Ein Halter kann innerhalb einer Hülse des Sensorkopfes liegen und alle Einzelteile des Sensorkopfes mitsamt Verbindungstechnik und ein gegebenenfalls vorhandenes Temperatursensorelement aufnehmen. Der Halter kann beispielsweise vollständig oder teilweise spritztechnisch aus Kunststoff hergestellt sein. Das Gehäuse, einschließlich Anschlussstecker und Deckel, wie beispielsweise aus Kunststoff, nimmt die Hülse, den Halter, die Elektronik auf und dient zur mechanischen Fixierung der Bauelemente und zum Schutz gegen Medien. Eine Außenkontur des Gehäuses, speziell im Bereich einer Auflagefläche, ist zur thermischen Entkopplung entsprechend gestaltet. Der Signalverstärker im Gehäuse, der beispielsweise auf einer Platine mit analogen und/oder digitalen Bestanteilen, die beispielsweise in eine anwendungsspezifische integrierte Schaltung (ASIC) integriert sein können, verarbeitet das Drehzahlsignal und leitet dies über den Steckanschluss an beispielsweise ein Motorsteuergerät weiter. Eine Befestigungsbuchse, die in das Gehäuse integriert sein kann und von diesem als Vorsprung ausgebildet sein kann, ist zur mechanischen Fixierung an beispielsweise einem Verdichtergehäuse vorgesehen.

Die erfindungsgemäße Sensorvorrichtung reduziert die thermische Belastung des Sensorbereichs, der hier als Anbau eines Drehzahlsensors an einem Verdichtergehäuse ausgebildet sein kann. Hierdurch wird ermöglicht, einerseits die thermischen Betriebsgrenzen einer integrierten Elektronik nicht zu überschreiten, andererseits die Kosten der eingesetzten Werkstoffe durch Anwendung heute üblicher, im Automobil gängiger Kunststoffe einzusetzen. Dadurch wird die Lebensdauer der Sensorvorrichtung erhöht und die Spezifikationsanforderungen können reduziert werden. Ferner wird dadurch eine nahezu bauraumneutrale konstruktive Lösung vorgeschlagen. Die erfindungsgemäße Sensorvorrichtung kann beispielsweise durch eine entsprechende Formgebung in Kunststoffwerkzeugen eine kostenneutrale Lösung darstellen. Ferner sind keine zusätzlichen Bauteile oder Einzelteile erforderlich. Vorzugsweise kann der Sensorabschnitt eine Hülse aus Edelstahl umfassen, die eine geringere Wärmeleitung gegenüber Messing oder Stahl aufweist. Die neue Geometrie der Sensorvorrichtung dient zusätzlich zur besseren Montage und Lageorientierung. Der entstandene Zwischenraum, der abhängig von der geometrischen Gestaltung ist, zwischen Sensor und Verdichtergehäuse kann beispielsweise durch Konvektion oder Luftströmung am Motor bzw. im Motorraum den Wärmeeintrag von Verdichtergehäuse zum Sensor noch weiter reduzieren. Dies wirkt zusätzlich der Temperaturerhöhung des Sensors während der hohen thermischen Belastungen bei Heißabstellen eines Motors nach Volllastbetrieb entgegen. Die hierzu erforderliche Gehäusekontur kann über die Gestaltung des Sensorgehäuses hergestellt werden, die Spritzwerkzeugtechnik ändert sich hierbei nicht. Durch die erfindungsgemäße konstruktive Maßnahme taucht der Sensorkopf bzw. der Sensorabschnitt tief in das Verdichtergehäuse ein. Das Sensorgehäuse ist mit dem Verdichtergehäuse verschraubt und liegt mit der optimierten Geometrie des Sensorgehäuses jedoch nur mit einem Bruchteil der Fläche am Verdichtergehäuse an. Die Wärmeleitung in das Sensorgehäuse wird somit reduziert und die Maximaltemperaturen reduziert. Die Aufnahme für den Sensorabschnitt ist beispielsweise derart ausgeführt, dass der Innenbereich des Verdichterkanals, in dem das Verdichterrad angeordnet ist, nicht durchbrochen wird und die Abtastung der Flügel oder Schaufeln des Verdichterrads durch eine Restwand der von außen angebrachten Aufnahme im Verdichtergehäuse erfolgt. In einem Abgasturbolader können sich in unterschiedlichen Betriebszuständen und im speziellen bei Belastungen in Grenzbereichen, wie beispielsweise bei Volllast oder Heißabstellen, des Otto- bzw. Dieselmotors kurzzeitig hohe thermische Belastungen ergeben. Durch die erfindungsgemäße Sensorvorrichtung werden die thermischen Belastungen der Bauteile der Sensorvorrichtung, insbesondere der Elektronik, deutlich reduziert.

### Kurze Beschreibung der Zeichnungen

Weitere optionale Einzelheiten und Merkmale bevorzugter Ausgestaltungen der Erfindung ergeben sich aus der nachfolgenden Beschreibung von Ausführungsbeispielen, die in den Zeichnungen schematisch dargestellt sind.

Es zeigen:
- Figur 1: ein erstes Ausführungsbeispiel einer erfindungsgemäßen Sensorvorrichtung,
- Figur 2: eine Seitenansicht eines Verdichtergehäuses,
- Figur 3: eine Seitenansicht des Laufzeugs eines Abgasturboladers,
- Figur 4: eine perspektivische Schnittansicht der Sensorvorrichtung in einem an einem Verdichtergehäuse angebrachten Zustand,
- Figur 5: einen vergrößerten Ausschnitt des Verdichtergehäuses und des Verdichterrads,
- Figur 6: eine Unteransicht einer Sensorvorrichtung gemäß einer ersten Modifikation,
- Figur 7: eine Seitenansicht der Sensorvorrichtung gemäß der ersten Modifikation,
- Figur 8: eine Seitenansicht der Sensorvorrichtung gemäß der ersten Modifikation in an einem Verdichtergehäuse angebrachten Zustand,
- Figur 9: eine Unteransicht einer Sensorvorrichtung gemäß einer zweiten Modifikation,
- Figur 10: eine Seitenansicht der Sensorvorrichtung gemäß der zweiten Modifikation und
- Figur 11: die Sensorvorrichtung gemäß der zweiten Modifikation in einem an einem Verdichtergehäuse angebrachten Zustand.

### Ausführungsformen der Erfindung

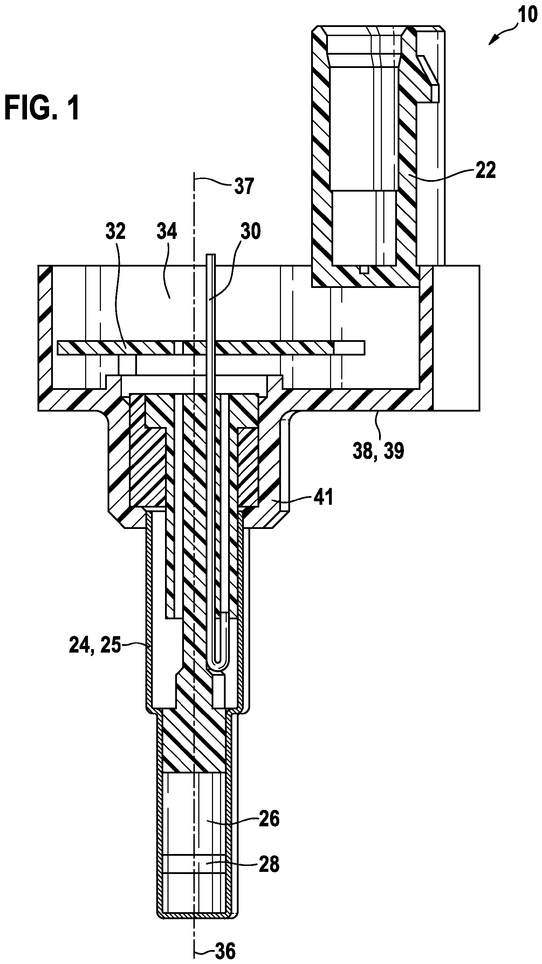

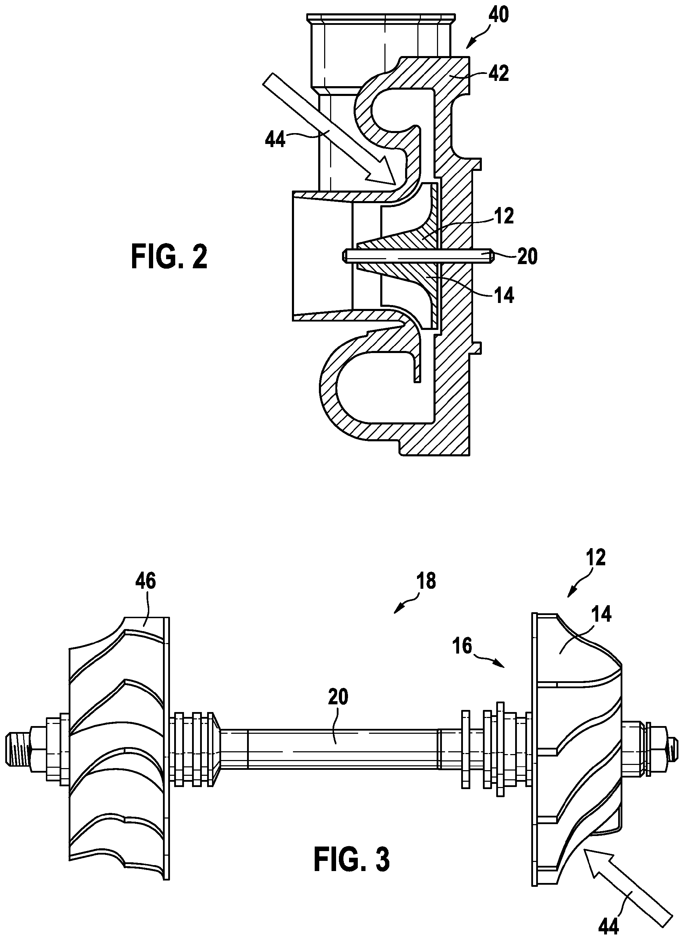

In Figur 1 ist ein erstes Ausführungsbeispiel einer erfindungsgemäßen Sensorvorrichtung 10 zur berührungslosen Erfassung mindestens einer Rotationseigenschaft eines drehbaren Gegenstands 12 (Figur 2) dargestellt. Wie in Figur 2 und Figur 3 gezeigt ist, ist der drehbare Gegenstand 12 in diesem Ausführungsbeispiel ein Verdichterrad 14 eines Verdichters 16 eines Abgasturboladers 18, welches um eine Drehachse 20 dreht, insbesondere rotiert. Beispielsweise ist die Sensorvorrichtung 10 als Drehzahlmesser ausgebildet, der eine Drehzahl des Verdichterrads erfasst. Auch andere Anwendungen und Einsatzgebiete sind jedoch grundsätzlich möglich.

Die Sensorvorrichtung 10 umfasst ein Sensorgehäuse 22, das zumindest teilweise aus Kunststoff hergestellt sein kann und einen Sensorabschnitt 24 aufweist, der zumindest teilweise aus Edelstahl hergestellt sein kann. Insbesondere ist der Sensorabschnitt 24 als eine nichtmagnetische Hülse 25 ausgebildet. In dem Sensorabschnitt 24 sind gemeinsam mindestens ein Magnetfelderzeuger 26, welcher in Form eines Permanentmagneten ausgestaltet sein kann, und ein Magnetfeldsensor 28 angeordnet, die gemeinsam auf einem Halter montiert sein können. Der Magnetfelderzeuger 26 ist ausgestaltet, um am Ort des drehbaren Gegenstands 12 ein Magnetfeld, vorzugsweise ein statisches Magnetfeld, zu erzeugen, welches in dem drehbaren Gegenstand 12 Wirbelströme induziert.

Der Magnetfeldsensor 28 kann als Spule ausgestaltet sein. Der Magnetfeldsensor 28 ist zur Erfassung eines durch Wirbelströme des drehbaren Gegenstands 12 erzeugten Magnetfelds vorgesehen. Eine elektrische Verbindung, insbesondere elektrische Zuleitungen 30, und/oder Verbindungselemente, insbesondere Steckkontakte, können, ebenso wie der Magnetfeldsensor 28 und der Magnetfelderzeuger 26, in dem Sensorabschnitt 24 angeordnet sein. Die Zuleitungen 30 sind mit einem Schaltungsträger 32, wie beispielsweise einer Leiterplatte, verbunden, die sich in einem Gehäuseinnenraum 34 befindet. Der Magnetfelderzeuger 26 kann entlang einer Achse 36 ausgerichtet sein, die mit einer Längsachse 37 des Sensorabschnitts 24 zusammenfällt. Der Sensorabschnitt 24 kann beispielsweise rotationssymmetrisch um die Längsache 37 ausgebildet sein. Insbesondere steht der Sensorabschnitt 24 von einer Unterseite 38 des Sensorgehäuses 22 im Wesentlichen senkrecht vor. Die Unterseite 38 kann beispielsweise als Auflagefläche 39 ausgebildet sein, mit der in einem Zustand, in dem die Sensorvorrichtung 10 an der den drehbaren Gegenstand 12 aufnehmenden Vorrichtung 40 montiert ist, das Sensorgehäuse 22 an der Vorrichtung 40 zumindest teilweise aufliegt. Der Sensorabschnitt 24 kann insbesondere aus einem Vorsprung 41 an der Unterseite 38 des Sensorgehäuses 22 vorstehen, der den Sensorabschnitt 24 abschnittsweise, d.h. nicht über die gesamte Länge des Sensorabschnitts 24, koaxial umgibt. Der Vorsprung 41 ist zur Zentrierung des Sensorabschnitts 24 in der Vorrichtung 40 ausgebildet. Der Vorsprung 41 kann den Sensorabschnitt 24 koaxial umgeben und somit in radialer Richtung abstützen. Der Vorsprung 41 kann außerdem Teil einer oder als Befestigungsbuchse ausgebildet sein, die in das Sensorgehäuse 22 integriert sein kann. Beispielsweise kann der Vorsprung 41 eine aus Metall hergestellte Hülse sein, die mit Kunststoff umspritzt ist und mit einem Außengewinde versehen ist, das zum Einschrauben des Sensorgehäuses 22 in die Vorrichtung 40 ausgebildet ist.

Wie in Figur 2 gezeigt ist, ist der drehbare Gegenstand 12 innerhalb einer Vorrichtung 40 angeordnet oder aufgenommen, die ein Verdichtergehäuse 42 umfasst. Das Verdichtergehäuse 42 kann zumindest teilweise aus einer Aluminiumgusslegierung hergestellt sein. Ferner gibt in Figur 2 ein Pfeil 44 eine mögliche Montageposition der Sensorvorrichtung 10 an dem Verdichtergehäuse 42 an.

Wie in Figur 3 gezeigt ist, umfasst ein Abgasturbolader 18 allgemein ein Turbinenrad 46, das von strömendem Abgas antreibbar ist und mit der Drehachse 20 verbunden ist, wobei sich bei einer Drehung des Turbinenrads 46 gleichzeitig das Verdichterrad 14 dreht, das ebenfalls mit der Drehachse 20 verbunden ist. Auch in Figur 3 ist die mögliche Montageposition der Sensorvorrichtung 10 an dem Verdichtergehäuse 42 durch den Pfeil 44 angegeben.

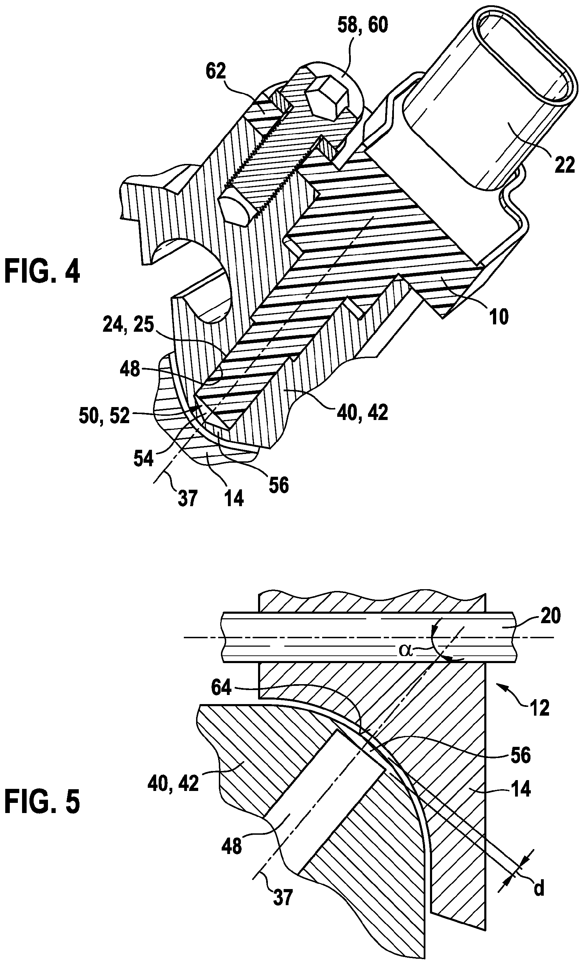

Wie in Figur 4 gezeigt ist, weist das Verdichtergehäuse 42 eine Aufnahme 48 auf, die in der Form eines Sacklochs oder Grundlochs ausgebildet ist. Zum Montieren der Sensorvorrichtung 10 an dem Verdichtergehäuse 42 wird der Sensorabschnitt 24 in die Aufnahme 48 gesteckt, wobei sich zwischen einem von dem Sensorgehäuse 22 abgewandten Ende 50 des Sensorabschnitts 24, das ein Vorderende 52 des Sensorabschnitts 24 darstellt, und einem Teil 56 der Wand des Verdichtergehäuses 42 ein Spalt 54 in der Richtung der Längsachse 37 des Sensorabschnitts 24 befindet. Der Spalt 54 kann beispielsweise eine Abmessung in der Richtung der Längsachse 37 des Sensorabschnitts 24 von 0,2 mm bis 0,3 mm aufweisen. Die sich in dem Spalt 48 befindende Luft zwischen dem Teil 56 der Wand des Verdichtergehäuses 42 und dem Vorderende 52 des Sensorabschnitts 24 bewirkt eine thermische Isolierung, da Luft einen schlechtere Wärmeleitfähigkeit als die genannten Materialien des Verdichtergehäuses 42 und des Sensorabschnitts 24 aufweist. Ferner ist zwischen dem Sensorabschnitt 24 und den die Aufnahme 48 definierenden Wandabschnitten des Verdichtergehäuses 42 ein koaxialer Spalt ausgebildet, der ebenfalls der thermischen Entkopplung dient und sich über die gesamte oder einen Teil der Länge des Sensorabschnitts 24 in der Richtung der Längsachse 37 erstrecken kann. Auf weitere Details bezüglich des Spalts wird nachstehend ausführlicher eingegangen. Zur endgültigen Montage wird das Sensorgehäuse 22 mittels eines Befestigungsmittels 58 an dem Verdichtergehäuse 42 befestigt. Dieses Befestigungsmittel 58 kann beispielsweise in Form einer Schraube 60 ausgebildet sein, die durch einen Flansch 62 an dem Sensorgehäuse 22 hindurch gesteckt wird. In den Flansch 62 kann beispielsweise eine Hülse aus Metall oder Messing eingebracht sein, wie beispielsweise durch Umspritzen mit Kunststoff, wobei die Hülse eingerichtet ist, zu verhindern, dass die Schraube 60 beim Verschrauben unmittelbar auf den Kunststoff des Sensorgehäuses 22 bzw. des Flanschs 62 drückt.

Wie in Figur 5 gezeigt ist, ist das Verdichtergehäuse 42 derart ausgestaltet, dass eine dem Verdichterrad 14 zuweisende Oberfläche 64 des Sensorgehäuses 22 einen gekrümmten Verlauf aufweist, vorzugsweise einen einer Krümmung des Verdichterrads 14 angepassten gekrümmten Verlauf. Unter einem gekrümmten Verlauf ist dabei ein nicht ebener Verlauf zu verstehen. Unter einem angepassten Verlauf ist ein Verlauf zu verstehen, bei welchem ein Abstand zwischen der Oberfläche 64 und dem rotierenden Verdichterrad 14 in zumindest einer Richtung auf der Oberfläche 64 über zumindest eine gewisse Strecke oder Fläche hinweg im Wesentlichen konstant ausgestaltet ist, beispielsweise indem dieser Abstand über eine Strecke von mindestens 1 cm, vorzugsweise mindestens 2 cm, hinweg um nicht mehr als 20 % variiert, vorzugsweise um nicht mehr als 10 %. Der Abstand zwischen der Oberfläche 64 und dem Verdichterrad 14 kann beispielsweise 0,05 mm bis 0,3 mm und bevorzugt 0,1 mm sein.

Figur 5 zeigt ferner dass sich zwischen der Aufnahme 48 und dem Verdichterrad 14 der Teil 56 der Wand des Verdichtergehäuses 42 befindet. Der Teil 56 kann eine Abmessung d in der Richtung der Längsachse 37 des Sensorabschnitts 24 von 0,1 mm bis 2 mm, bevorzugt 0,2 mm bis 1,8 mm und noch bevorzugter von 0,5 mm bis 1 mm, beispielsweise von 0,5 mm aufweisen und wird möglichst klein gewählt, um Störeinflüsse auf das von dem Magnetfeldsensor 28 erfasste Magnetfeld möglichst gering zu halten. Mit anderen Worten wird angestrebt, dass ein durch Wirbelströme des drehbaren Gegenstands 12 erzeugtes Magnetfeld möglichst ohne oder mit geringer Abschwächung von dem Magnetfeldsensor 28 erfassbar ist. Die Aufnahme 48 kann insbesondere so ausgebildet sein, dass das Vorderende 52 des Sensorabschnitts 24 möglichst nah zu den vorbeilaufenden Verdichterschaufeln des Verdichterrads 14 positioniert ist. Ferner zeigt Figur 5, dass der Sensorabschnitt 24 so an dem Verdichtergehäuse 42 angebracht werden kann, dass die Längsachse 37 in einem Winkel α von 25 ° bis 65 °, bevorzugt von 30 ° bis 60 ° und noch bevorzugter von 45 °, beispielsweise genau 45 °, zu der Drehachse 20 angeordnet ist. Aufgrund des Teils 56 der Wand des Verdichtergehäuses 42 nimmt die Beeinflussung des durch Wirbelströme des drehbaren Gegenstands 12 erzeugten Magnetfelds mit zunehmender Abmessung d in der Richtung der Längsachse 37, die auch als Dicke bezeichnet werden kann, ab. Daher kann die Sensorvorrichtung 10 einen Signalverstärker umfassen, der an dem Schaltungsträger 32 angebracht oder enthalten ist. Dadurch wird das erfasste Magnetfeld und beispielsweise das mit diesem Magnetfeld einhergehende Spannungssignal verstärkt. Ohne Verstärker wäre es beispielsweise möglich, dass an dem Magnetfeldsensor 28 nur Spannungen in einem Bereich von wenigen mV abgegriffen werden können. Aufgrund des Verstärkers können jedoch für eine genaue Auswertung Spannungen von mehreren Volt, beispielsweise 5 V bis 12 V, abgegriffen werden.

Bei der Sensorvorrichtung 10 kann die Erfassung der Rotationseigenschaft des drehbaren Gegenstands 12 darauf beruhen, dass der Magnetfelderzeuger 26 am Ort des drehbaren Gegenstands 12 ein Magnetfeld, insbesondere ein statisches Magnetfeld, erzeugt. Bei Drehung, insbesondere Rotation des drehbaren Gegenstands 12, der hier ein Verdichterrad 14 ist, das um die Drehachse 20 dreht, insbesondere rotiert, werden Wirbelströme erzeugt, die das Magnetfeld und insbesondere den magnetischen Fluss beeinflussen, insbesondere verändern. Die an dem Magnetfeldsensor 28 abgreifbare Spannung ist der zeitlichen Änderung eines magnetischen Flusses an dem Magnetfeldsensor 28 proportional.

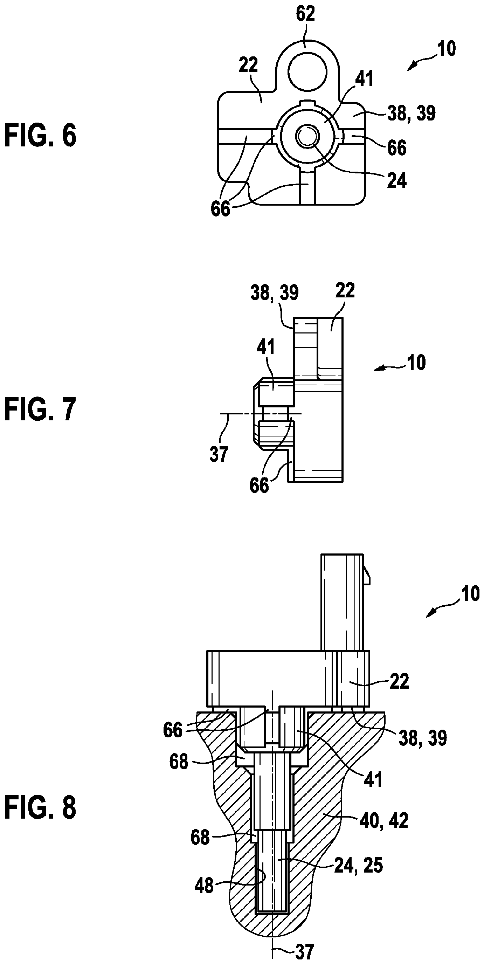

Figur 6 zeigt eine Unteransicht des Sensorgehäuses 22 und seiner Auflagefläche 38 gemäß einer möglichen Modifikation der Sensorvorrichtung 10. Wie in Figur 6 gezeigt ist, können an der Auflagefläche 38 mehrere Stege 66 angeordnet sein. Beispielsweise können drei Stege 66 vorgesehen sein, die in jeweils einem rechten Winkel zueinander auf der Auflagefläche 38 um den Vorsprung 41 angeordnet sind. Insbesondere stehen die Stege 66 von der Auflagefläche 38 in der Richtung der Längsachse 37 vor.

Figur 7 zeigt eine entsprechende Seitenansicht der ersten Modifikation der Sensorvorrichtung 10. Auch dort sind die Stege 66 gut zu erkennen. Ferner zeigt Figur 7, dass die Stege 66 eine geringere Abmessung in der Richtung der Längsachse 37 als der Vorsprung 41 aufweisen.

Figur 8 zeigt die Anordnung der Sensorvorrichtung 10 gemäß der ersten möglichen Modifikation an dem Verdichtergehäuse 42. Aufgrund der Stege 66 liegt die Auflagefläche 39 nicht direkt am Verdichtergehäuse 42 auf, sondern ist von dieser beabstandet, da die Stege 66 als Abstandshalter wirken. Der Abstand der Auflagefläche 39 des Sensorgehäuses 22 zu dem Verdichtergehäuse 42 kann beispielsweise 1 mm betragen und sorgt dafür, dass eine gewisse Luftmenge zwischen der Auflagefläche 39 und insbesondere der Unterseite 38 des Sensorgehäuses 22 und dem Verdichtergehäuse 42 hindurch strömen kann. Dies sorgt für eine thermische Entkopplung zwischen dem Sensorgehäuse 22 und dem Verdichtergehäuse 42, an dessen dem Sensorgehäuse 22 zugewandter Oberfläche Temperaturen von ungefähr 150 °C herrschen können. Das Sensorgehäuse 22 liegt somit nur mit einem Bruchteil der Auflagefläche 39 an dem Verdichtergehäuse 42 an. Ferner zeigt Figur 8, dass sich zwischen dem Sensorabschnitt 24 und dem Verdichtergehäuse 42 in der Aufnahme 48 ein koaxialer Spalt 68 befindet. Mit anderen Worten ist der Durchmesser der Aufnahme 48 geringfügig größer als der Durchmesser des Sensorabschnitts 24. Dies sorgt ebenfalls für eine thermische Entkoppelung, da der Sensorabschnitt 24 keinen direkten Kontakt zum Verdichtergehäuse 42 innerhalb der Aufnahme 48 aufweist. Ferner ist zu erwähnen, dass das Verdichtergehäuse 42 üblicherweise aus einer Aluminiumlegierung hergestellt ist und der aus Edelstahl hergestellte Sensorabschnitt 24 daher eine geringere Wärmeleitfähigkeit aufweist. Somit wird ein Wärmeübergang von dem Verdichtergehäuse 42 auf den Magnetfelderzeuger 26 und den Magnetfeldsensor 28 im Inneren des Sensorabschnitts 24 verringert. Daher ist die thermische Belastung des Magnetfelderzeugers 26 und des Magnetfeldsensors 28 geringer als bei Sensorvorrichtungen, bei denen eine Aufnahme als Durchgangsloch und/oder Durchgangsbohrung ausgebildet ist und/oder bei denen der Sensorabschnitt an den Wänden der Aufnahme anliegt.

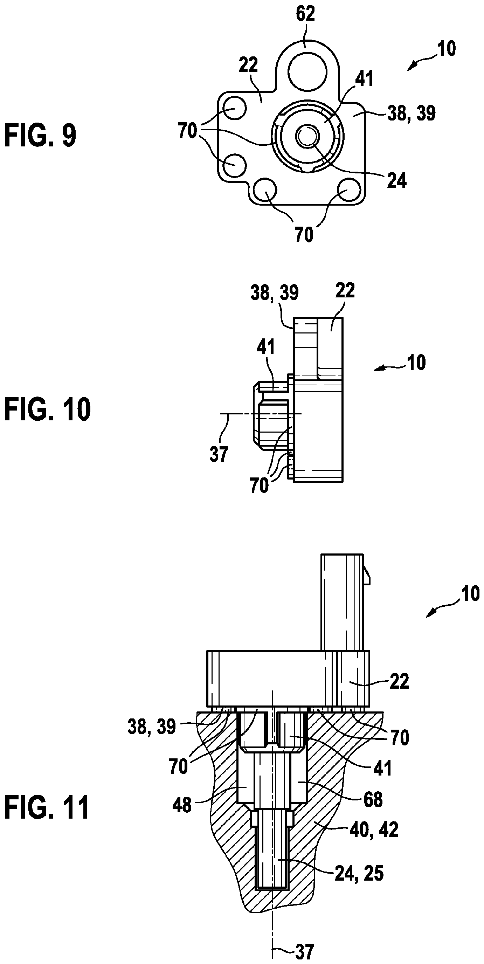

Figur 9 zeigt eine Sensorvorrichtung 10 gemäß einer zweiten möglichen Modifikation in einer Unteransicht. Hierbei werden nur die Unterschiede zu der ersten möglichen Modifikation beschrieben und gleiche Bauteile weisen gleiche Bezugszeichen auf. Bei der Sensorvorrichtung 10 gemäß der zweiten möglichen Modifikation sind die Stege 66 durch kreisförmige Abstandshalter 70 ersetzt. Die Abstandshalter 70 befinden sich auf der Auflagefläche 39 und können mit der gleichen Abmessung wie die Stege 66 von der Unterseite 38 vorstehen. Beispielsweise sind vier Abstandshalter 70 vorgesehen, die an äußeren Randbereichen der Unterseite 38 verteilt angeordnet sind.

Figur 10 zeigt eine entsprechende Seitenansicht der zweiten Modifikation der Sensorvorrichtung 10. Auch dort sind die Abstandshalter 70 gut zu erkennen. Wie Figur 10 zeigt, sind die kreisförmigen Abstandshalter 70 auf der Auflagefläche 39 verteilt angeordnet. Ferner zeigt Figur 10, dass die Abstandshalter 70 eine geringere Abmessung in der Richtung der Längsachse 37 als der Vorsprung 41 aufweisen.

Figur 11 zeigt die Anordnung der Sensorvorrichtung 10 gemäß der zweiten möglichen Modifikation in einem an dem Verdichtergehäuse 42 angebrachten Zustand. Dabei befindet sich der Sensorabschnitt 24 in der Aufnahme 48, wobei der Durchmesser der Aufnahme 48 größer sein kann als der Durchmesser des Sensorabschnitts 24, so dass sich auch bei der zweiten Modifikation ein koaxialer Spalt 68 zwischen dem Verdichtergehäuse 42 und dem Sensorabschnitt 24 befindet, der für eine thermische Entkoppelung sorgt, da der Sensorabschnitt 24 keinen direkten Kontakt zum Verdichtergehäuse 42 aufweist.

Es wird explizit betont, dass alle in der Beschreibung und/oder in den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Kombination aus einer Sensorvorrichtung (10) zur berührungslosen Erfassung eines drehbaren Gegenstandes (12), insbesondere zur Erfassung einer Drehzahl eines Verdichterrads (14) eines Turboladers (18), und einer den drehbaren Gegenstand (12) umfassenden Vorrichtung (40), wobei die Sensorvorrichtung (10) ein Sensorgehäuse (22) umfasst, wobei die Sensorvorrichtung (10) weiterhin mindestens einen Magnetfelderzeuger (26) zur Erzeugung eines magnetischen Feldes am Ort des drehbaren Gegenstands (12) und mindestens einen Magnetfeldsensor (28) zur Erfassung eines durch Wirbelströme des drehbaren Gegenstands (12) erzeugten Magnetfelds umfasst, wobei der Magnetfelderzeuger (26) und der Magnetfeldsensor (28) zumindest teilweise gemeinsam in einem Sensorabschnitt (24) des Sensorgehäuses (22) angeordnet sind, wobei die Sensorvorrichtung (10) weiterhin mindestens ein Verbindungselement (58, 60, 62) aufweist, wobei das Verbindungselement (41, 58, 60, 62) eingerichtet ist, um die Sensorvorrichtung (10) derart mit der den drehbaren Gegenstand (12) umfassenden Vorrichtung (40), insbesondere einem Turbolader (18), zu verbinden, dass das Sensorgehäuse (22) zumindest abschnittsweise von der den drehbaren Gegenstand (12) umfassenden Vorrichtung (40) beabstandet ist, und wobei der Sensorabschnitt (24) in eine Aufnahme (48) in einer Wand der Vorrichtung (40) einbringbar ist, **dadurch gekennzeichnet, dass** sich im eingebrachten Zustand zumindest abschnittsweise ein koaxialer Spalt (68) zwischen der Wand der Vorrichtung (40) und dem Sensorabschnitt (24) zur thermischen Entkopplung befindet.

2. Kombination nach dem vorhergehenden Anspruch, wobei der Magnetfelderzeuger (26) entlang einer Achse (36) ausgerichtet ist und sich eine Längsachse (37) des Sensorabschnitts (24) im Wesentlichen parallel zu der Achse (36) des Magnetfelderzeugers (26) erstreckt, wobei der Sensorabschnitt (24) so ausgebildet ist, dass sich in einem an der den drehbaren Gegenstand (12) umfassenden Vorrichtung (40) angebrachten Zustand des Sensorgehäuses (22) zwischen dem Sensorabschnitt (24) und dem drehbaren Gegenstand (12) in einer Richtung im Wesentlichen parallel zu der Längsachse (37) des Sensorabschnitts ein Teil (56) der Vorrichtung (40) befindet.

3. Kombination nach dem vorhergehenden Anspruch, wobei die Abmessung des Teils (56) der Vorrichtung (40) in der Richtung der Längsachse (37) des Sensorabschnitts (24) von 0,1 mm bis 2 mm, bevorzugt 0,2 mm bis 1,8 mm und noch bevorzugter von 0,5 mm bis 1 mm, ist.

4. Kombination nach einem der beiden vorhergehenden Ansprüche, wobei der Sensorabschnitt (24) in eine Aufnahme (48) in einer Wand der Vorrichtung (40) einbringbar ist und sich im eingebrachten Zustand in der Richtung der Längsachse (37) des Sensorabschnitts (24) zwischen dem Sensorabschnitt (24) und dem Teil (56) der Vorrichtung (40) ein Spalt (54) befindet.

5. Kombination nach einem der vorhergehenden Ansprüche, wobei das Sensorgehäuse (22) Abstandshalter (66, 70) aufweist, die in einem an der den drehbaren Gegenstand (12) umfassenden Vorrichtung (40) angebrachten Zustand des Sensorgehäuses (22) die Vorrichtung (40) berühren.

6. Kombination nach einem der vorhergehenden Ansprüche, wobei das Sensorgehäuse (22) Stege (66) und/oder kreisförmige Vorsprünge (70) aufweist, die in einem an der den drehbaren Gegenstand (12) umfassenden Vorrichtung (40) angebrachten Zustand des Sensorgehäuses (22) die Vorrichtung (40) berühren.

7. Kombination nach einem der vorhergehenden Ansprüche 2 bis 6, wobei der Gegenstand (12) um eine Drehachse (20) drehbar ist, wobei die Längsachse (37) des Sensorabschnitts (24) in einem an der Vorrichtung (40) angebrachten Zustand des Sensorgehäuses (22) in einem Winkel (α) von 25 ° bis 65 ° und besonders bevorzugt von 30 ° bis 60 ° und noch bevorzugter von 45 ° zu der Drehsachse (20) angeordnet ist.

8. Kombination nach einem der vorhergehenden Ansprüche, wobei die Sensorvorrichtung (10) ein Drehzahlsensor ist und der drehbare Gegenstand ein Verdichterrad (14) eines Laders, insbesondere eines Abgasturboladers (18), ist.

## Claims

1. Combination comprising a sensor apparatus (10) for contactlessly detecting a rotatable object (12), in particular for detecting a rotation speed of a compressor wheel (14) of a turbocharger (18), and an apparatus (40) which comprises the rotatable object (12), wherein the sensor apparatus (10) comprises a sensor housing (22), wherein the sensor apparatus (10) further comprises at least one magnetic field generator (26) for generating a magnetic field at the site of the rotatable object (12) and at least one magnetic field sensor (28) for detecting a magnetic field which is generated by eddy currents of the rotatable object (12), wherein the magnetic field generator (26) and the magnetic field sensor (28) are at least partially jointly arranged in a sensor section (24) of the sensor housing (22), wherein the sensor apparatus (10) further has at least one connecting element (58, 60, 62), wherein the connecting element (41, 58, 60, 62) is designed in order to connect the sensor apparatus (10) to the apparatus (40) which comprises the rotatable object (12), in particular to a turbocharger (18), in such a way that the sensor housing (22) is spaced apart from the apparatus (40) which comprises the rotatable object (12) at least in sections, and wherein the sensor section (24) can be inserted into a receptacle (48) in a wall of the apparatus (40), **characterized in that**, in the inserted state, there is a coaxial gap (68) between the wall of the apparatus (40) and the sensor section (24) at least in sections for thermal decoupling purposes.

2. Combination according to the preceding claim, wherein the magnetic field generator (26) is oriented along an axis (36) and a longitudinal axis (37) of the sensor section (24) extends substantially parallel to the axis (36) of the magnetic field generator (26), wherein the sensor section (24) is designed such that, in a state of the sensor housing (22) in which it is attached to the apparatus (40) which comprises the rotatable object (12), a portion (56) of the apparatus (40) is located between the sensor section (24) and the rotatable object (12) in a direction substantially parallel to the longitudinal axis (37) of the sensor section.

3. Combination according to the preceding claim, wherein the dimension of the portion (56) of the apparatus (40) in the direction of the longitudinal axis (37) of the sensor section (24) is from 0.1 mm to 2 mm, preferably 0.2 mm to 1.8 mm, and more preferably from 0.5 mm to 1 mm.

4. Combination according to one of the two preceding claims, wherein the sensor section (24) can be inserted into a receptacle (48) in a wall of the apparatus (40) and, in the inserted state, a gap (54) is located between the sensor section (24) and the portion (56) of the apparatus (40) in the direction of the longitudinal axis (37) of the sensor section (24).

5. Combination according to one of the preceding claims, wherein the sensor housing (22) has spacers (66, 70) which, in a state of the sensor housing (22) in which it is attached to the apparatus (40) which comprises the rotatable object (12), make contact with the apparatus (40) .

6. Combination according to one of the preceding claims, wherein the sensor housing (22) has webs (66) and/or circular projections (70) which, in a state of the sensor housing (22) in which it is attached to the apparatus (40) which comprises the rotatable object (12), make contact with the apparatus (40).

7. Combination according to one of the preceding Claims 2 to 6, wherein the object (12) can rotate about a rotation axis (20), wherein the longitudinal axis (37) of the sensor section (24), in a state of the sensor housing (22) in which it is attached to the apparatus (40), is arranged at an angle (α) of from 25° to 65°, and particularly preferably of from 30° to 60°, and more preferably of 45°, in relation to the rotation axis (20).

8. Combination according to one of the preceding claims, wherein the sensor apparatus (10) is a rotation speed sensor and the rotatable object is a compressor wheel (14) of a charger, in particular of an exhaust gas turbocharger (18).

## Revendications

1. Combinaison d'un dispositif capteur (10) destiné à la détection sans contact d'un objet rotatif (12), notamment destiné à la détection d'une vitesse de rotation d'une roue de compresseur (14) d'un turbocompresseur (18), et d'un dispositif (40) comprenant l'objet rotatif (12), le dispositif capteur (10) comportant un boîtier de capteur (22), le dispositif capteur (10) comprenant en outre au moins un générateur de champ magnétique (26) destiné à générer un champ magnétique à l'endroit de l'objet rotatif (12) et au moins un capteur de champ magnétique (28) destiné à détecter un champ magnétique généré par les courants de Foucault de l'objet rotatif (12), le générateur de champ magnétique (26) et le capteur de champ magnétique (28) étant au moins partiellement disposés ensemble dans une portion de capteur (24) du boîtier de capteur (22),
le dispositif capteur (10) possédant en plus au moins un élément de liaison (58, 60, 62), l'élément de liaison (41, 58, 60, 62) étant conçu pour relier le dispositif capteur (10) à un dispositif (40) comprenant l'objet rotatif (12), notamment un turbocompresseur (18), de telle sorte que
le boîtier de capteur (22) est espacé au moins dans certaines portions du dispositif (40) comprenant l'objet rotatif (12) et la portion de capteur (24) pouvant être introduite dans un logement (48) dans une paroi du dispositif (40), **caractérisé en ce que** dans l'état introduit, un entrefer coaxial (68) se trouve au moins dans certaines portions entre la paroi du dispositif (40) et la portion de capteur (24).

2. Combinaison selon la revendication précédente, le générateur de champ magnétique (26) étant orienté le long d'un axe (36) et un axe longitudinal (37) de la portion de capteur (24) s'étendant sensiblement parallèlement à l'axe (36) du générateur de champ magnétique (26), la portion de capteur (24) étant configurée de telle sorte que dans un état dans lequel le boîtier de capteur (22) est appliqué contre le dispositif (40) comprenant l'objet rotatif (12), une partie (56) du dispositif (40) se trouve entre la portion de capteur (24) et l'objet rotatif (12) dans une direction sensiblement parallèle à l'axe longitudinal (37) de la portion de capteur.

3. Combinaison selon la revendication précédente, la dimension de la partie (56) du dispositif (40) dans la direction de l'axe longitudinal (37) de la portion de capteur (24) étant de 0,1 mm à 2 mm, de préférence de 0,2 mm à 1,8 mm et encore de préférence de 0,5 mm à 1 mm.

4. Combinaison selon l'une des deux revendications précédentes, la portion de capteur (24) pouvant être introduite dans un logement (48) dans une paroi du dispositif (40) et, dans l'état introduit, un entrefer (54) se trouvant dans la direction de l'axe longitudinal (37) de la portion de capteur (24) entre la portion de capteur (24) et la partie (56) du dispositif (40).

5. Combinaison selon l'une des revendications précédentes, le boîtier de capteur (22) possédant des entretoises (66, 70) qui, dans un état dans lequel le boîtier de capteur (22) est appliqué contre le dispositif (40) comprenant l'objet rotatif (12), sont en contact avec le dispositif (40).

6. Combinaison selon l'une des revendications précédentes, le boîtier de capteur (22) possédant des nervures (66) et/ou des parties saillantes circulaires (70) qui, dans un état dans lequel le boîtier de capteur (22) est appliqué contre le dispositif (40) comprenant l'objet rotatif (12), sont en contact avec le dispositif (40) .

7. Combinaison selon l'une des revendications 2 à 6, l'objet (12) pouvant tourner autour d'un axe de rotation (20), l'axe longitudinal (37) de la portion de capteur (24), dans un état dans lequel le boîtier de capteur (22) est appliqué contre le dispositif (40), étant disposé à un angle (α) de 25° à 65° et notamment de préférence de 30° à 60° et encore davantage de préférence de 45° par rapport à l'axe de rotation (20).

8. Combinaison selon l'une des revendications précédentes, le dispositif capteur (10) étant un capteur de vitesse de rotation et l'objet rotatif une roue de compresseur (14) d'un compresseur d'alimentation, notamment d'un turbocompresseur des gaz d'échappement (18) .
